# EUROPÄISCHE PATENTSCHRIFT

(11) **EP 2 190 105 B1**
(45) Veröffentlichungstag und Bekanntmachung des Hinweises auf die Patenterteilung: **19.07.2017**
(21) Anmeldenummer: 09176446.4
(22) Anmeldetag: 19.11.2009
(51) Int. Cl.: H02K 11/33, H02K 5/22

(54) **Frequenzumrichter zum Steuern eines Elektromotors**
Frequency inverter for controlling an electric motor
Convertisseur de fréquence pour contrôler un moteur électrique

(30) Priorität: 21.11.2008 DE 102008058511
(43) Veröffentlichungstag der Anmeldung: 26.05.2010
(73) Patentinhaber: Kostal Industrie Elektrik GmbH, 58513 Lüdenscheid (DE)
(72) Erfinder: Rüggen, Christian, 44805, Bochum (DE); Bartholomeizik, Harald, 59425, Unna (DE); Wustlich, André, 59494, Soest (DE); Penzek, Steffen, 59192, Bergkamen (DE)
(74) Vertreter: Kerkmann, Detlef

(56) Entgegenhaltungen:
- EP-A2- 1 237 260
- DE-A1- 10 109 797
- DE-A1- 10 332 392
- DE-A1-102005 015 318
- JP-A- 2007 009 998
- US-A1- 2005 167 183
- US-B1- 6 229 232

## Beschreibung

Die Erfindung betrifft einen Frequenzumrichter zum Steuern eines Elektromotors mit einem zur Montage auf dem Motorgehäuse vorgesehenen Umrichtergehäuse, wobei der Frequenzumrichter ausgangsseitig über Steckverbinder lösbar mit dem Elektromotor verbindbar ist, und wobei das Umrichtergehäuse mittels eines mechanisch einerseits mit dem Motorgehäuse und andererseits mit dem Umrichtergehäuse verbundenen Adapters an dem Motorgehäuse festgelegt ist, welcher Adapter einen Schaltungsträger umfasst, auf dem erste elektrische Anschlusselemente zur Verbindung mit den Motoranschlussleitungen und zweite elektrische Anschlusselemente zur Verbindung mit dem Frequenzumrichter vorhanden sind.

Frequenzumrichter der hier angesprochenen Art werden als statische Frequenzumrichter zum Betrieb von Elektromotoren, insbesondere von Asynchronmaschinen eingesetzt, wobei die Verbindung von Frequenzumrichter und Elektromotor zu einer baulichen Einheit hinsichtlich elektromagnetischer Störeinflüsse deutliche Vorteile gegenüber der vom Motor getrennten Aufstellung des Frequenzumrichters in einem separaten Schaltschrank hat.

Aus der DE 36 42 724 A1 ist ein Frequenzumrichter bekannt, bei dem in einer der offenbarten Ausführungsformen der Frequenzumrichter insgesamt in einem als Klemmenkasten bezeichneten Umrichtergehäuse aufgenommen ist. Die netzseitige Anschlussleitung des Frequenzumrichters ist als angewachsenes Kabel aus dem Umrichtergehäuse herausgeführt. Zur Verbindung der Ausgangsseite des Frequenzumrichters mit den Motorkontakten ist an dem Umrichtergehäuse ein Stutzen mit darin aufgenommenen Steckerstiften angeformt. Durch Aufstecken des Klemmenkastens auf dem Motorgehäuse werden diese Steckerstifte mit entsprechend ausgebildeten, motorseitigen Steckbuchsen kontaktiert, wobei die Steckbuchsen mit den Motoranschlussleitungen elektrisch verbunden sind.

Bei einem bestimmten Motorgehäuse und einem passend dazu ausgebildeten Frequenzumrichter ist dies eine vorteilhafte Ausgestaltung. Diese ist allerdings nicht besonders flexibel, wenn der Frequenzumrichter zum Einsatz an einem anderen Elektromotor, insbesondere mit einem anderen Motorgehäuse vorgesehen werden muss.

Aus der US 6,229,232 ist ein Elektromotor mit einem Frequenzumrichter gemäß dem Oberbegriff des Patentanspruchs 1 bekannt. Zwischen dem Motorgehäuse und dem Umrichtergehäuse ist hier ein Zwischenteil angeordnet, das die Aufgabe eines üblichen Klemmenkastens erfüllt. Die Netzanschlussleitung wird in dieses Zwischenteil hineingeführt und von einem darin angeordneten Klemmenblock aus über Steckverbinderkontakte mit der Eingangsseite des Frequenzumrichters verbunden. Auf einem weiteren Klemmenblock in dem Zwischenteil sind die Motorkontakte aufgelegt und von dort aus über weitere Steckverbinderkontakte mit der Ausgangsseite des Frequenzumrichters verbunden.

Einen ähnlichen Aufbau zeigt auch die DE 101 09 797 A1. Das Hauptaugenmerk ist bei dem hier offenbarten Gegenstand darauf gerichtet, dass bei diesem das Zwischenteil in zwei unterschiedlichen Orientierungen gegenüber dem Motor montierbar ist. Dadurch ist die Zuführung der Netzanschlussleitung aus unterschiedlichen Richtungen ermöglicht. Gemäß der vorliegenden Erfindung ist der Frequenzumrichter gegenüber dem beschriebenen Stand der Technik eingangsseitig mit zumindest einer in das Umrichtergehäuse hineingeführten Netzanschlussleitung zum Anschluss an das Stromnetz verbunden, wobei der Adapter ein im Wesentlichen plattenförmiges Adaptergrundteil umfasst, das eine zentrale Öffnung aufweist, und der Schaltungsträger gegenüber dem Adaptergrundteil schwimmend gelagert ist. Vorzugsweise umfasst der Adapter dabei einen Schaltungsträger, auf dem erste elektrische Anschlusselemente zur Verbindung mit den Motoranschlussleitungen und zweite elektrische Anschlusselemente zur Verbindung mit dem Frequenzumrichter vorhanden sind, wobei in einer besonders praxistauglichen Ausführungsform die ersten elektrischen Anschlusselemente als Schraubklemmenleiste und die zweiten elektrischen Anschlusselemente als Steckerleiste ausgeführt sind, und wobei die einzelnen Kontakte der Schraubklemmenleiste sowie der Steckerleiste durch Leiter auf dem Schaltungsträger elektrisch miteinander verbunden sind.

Ein Toleranzausgleich zwischen dem Schaltungsträger des Adapters und einer die elektrischen Anschlusselemente des Frequenzumrichters aufweisenden Leiterplatte wird dadurch erreicht, dass der Adapter ein im wesentlichen plattenförmiges Adaptergrundteil umfasst, das eine zentrale Öffnung aufweist, und dass der Schaltungsträger gegenüber dem Adaptergrundteil schwimmend gelagert ist.

In einer besonders bevorzugten Ausgestaltung weist dabei die im Umrichtergehäuse fixierte Leiterplatte fest mit dieser verbundene Positionierstifte auf, denen Positionierlöcher auf dem Schaltungsträger des Adapters derart zugeordnet sind, dass beim Zusammenfügen des Umrichtergehäuses mit dem Adapter der Schaltungsträger so positioniert wird, dass ein einwandfreies Ineinandergreifen und elektrisches Kontaktieren des Steckverbinderteils des Adapters mit dem zugeordneten Gegensteckverbinderteil des Frequenzumrichters erfolgt.

Weitere vorteilhafte Ausgestaltungen und Weiterbildungen des erfindungsgemäßen Frequenzumrichters ergeben sich aus den Unteransprüchen und werden anhand der Zeichnung erläutert.

Es zeigen:
- Figur 1: Einen erfindungsgemäßen, auf einem Motorgehäuse eines Elektromotors montierten Frequenzumrichter
- Figur 2: Einen Elektromotor mit einem darauf montiertem Adapter zur Aufnahme des Frequenzumrichters
- Figur 3: Den Adapter aus Fig. 2 in a) einer Explosionsdarstellung b) einer Aufsicht c) einem Längsschnitt entlang der Linie A-A in b)
- Figur 4: Einen Längsschnitt durch den Frequenzumrichter (Gehäuseunterteil) und den Adapter

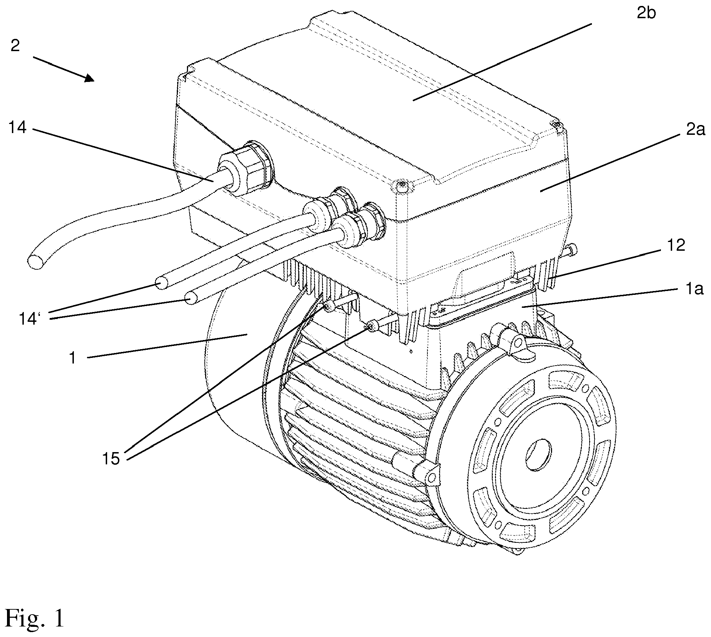

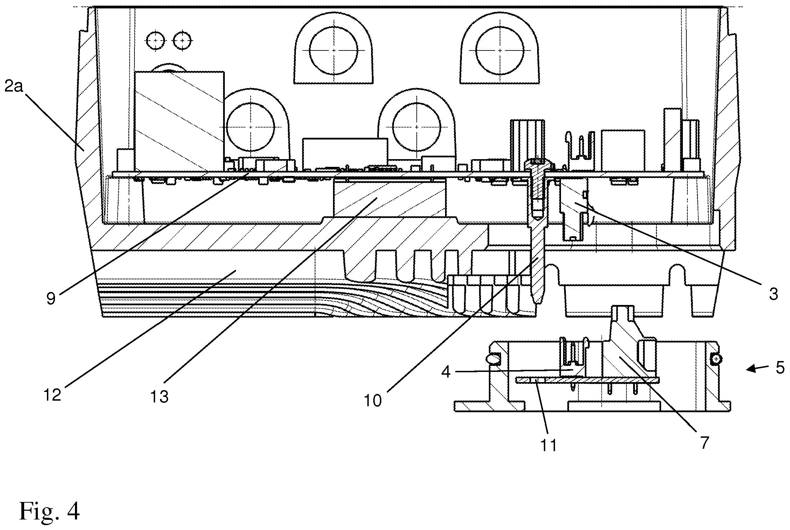

In Fig. 1 ist ein erfindungsgemäßer Frequenzumrichter zu sehen, der auf einem Elektromotor montiert ist. Das Umrichtergehäuse 2 besteht aus einem Gehäuseunterteil 2a, welches auch verschiedene funktionale Aspekte zu erfüllen hat, und einem Gehäusedeckel 2b, der im Wesentlichen lediglich die Aufgabe hat das Umrichtergehäuse 2 zu verschließen. Das Gehäuseunterteil 2a enthält, wie in der Schnittdarstellung in Fig. 4 zu sehen ist, eine Leiterplatte 9 auf der die elektronischen Bauelemente der Steuer- und Leistungselektronik des Frequenzumrichters aufgenommen sind. Das Gehäuseunterteil 2a, welches bevorzugt aus einem Material mit einer guten Wärmeleitfähigkeit, also z.B. aus Aluminium besteht, ist an seiner unteren Außenwand mit Kühlrippen 12 versehen, über die die insbesondere in den Leistungsbauelementen 13 des Frequenzumrichters entstehende Verlustwärme abgeführt wird. Die Leistungsbauelemente 13 sind dazu so auf der Leiterplatte 9 positioniert, dass sie in direktem Kontakt mit dieser unteren Außenwand stehen. An der seitlichen Außenwand des Umrichtergehäuses 2 sind die zumindest eine Netzanschlussleitung 14 sowie weitere Steuer- und/oder Sensorleitungen 14' durch Kabelverschraubungen in das Innere des Umrichtergehäuses 2 geführt.

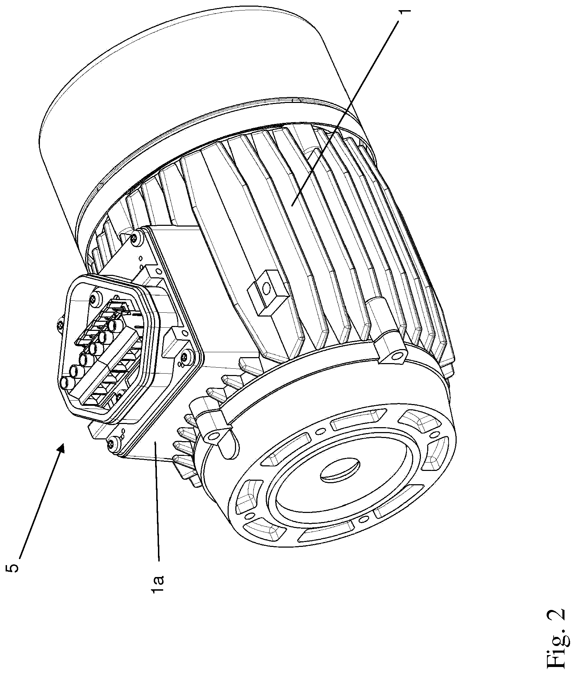

Die mechanische Befestigung des Gehäuseunterteils 2a des Umrichtergehäuses 2 an dem Motorgehäuse 1 erfolgt mittels eines Adapters 5, der zunächst auf einem Anschlussstutzen 1a des Motorgehäuses 1 aufgeschraubt wird, und an dem dann das Gehäuseunterteil 2a auch wiederum mittels Schrauben 15 befestigt wird. In Fig. 2 ist das Motorgehäuse 1 mit dem darauf aufgeschraubten Adapter 5 zu sehen.

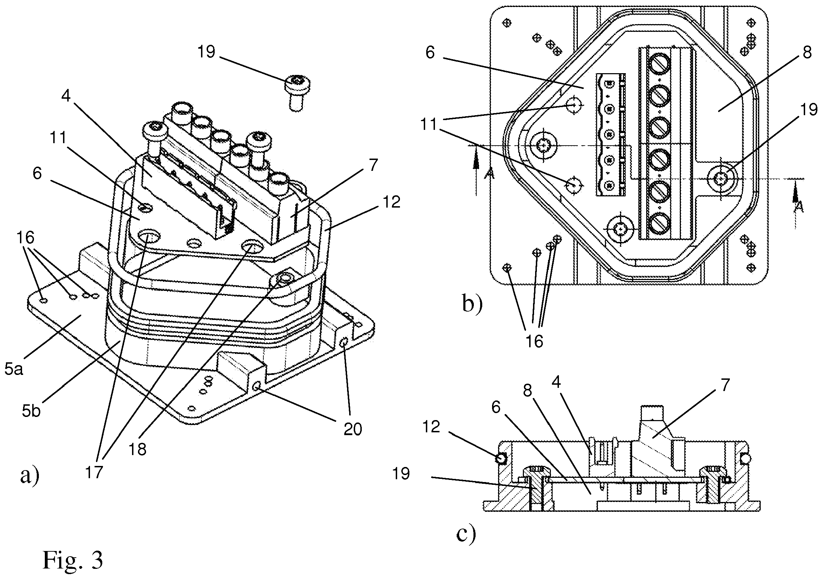

Der Adapter 5 selbst ist in Fig. 3 in verschiedenen Darstellungen gezeigt. Er umfasst ein im Wesentlichen plattenförmiges Adaptergrundteil 5a, das eine zentrale Öffnung 8 aufweist. Das Adaptergrundteil 5a kann je nach dem, welche thermischen Anforderungen und/oder Festigkeitsanforderungen in der jeweiligen Konfiguration zu erfüllen sind, aus einem metallischen Werkstoff wie z.B. Aluminium oder auch aus einem nichtmetallischen Werkstoff, etwa aus einem glasfaserverstärkten Kunststoff bestehen. Die zentrale Öffnung 8 des Adaptergrundteils 5a ist von einem einstückig an dieses angeformten Kragen 5b umgeben, der im oberen Bereich seiner Außenseite ein Dichtelement 12 zur Abdichtung gegenüber dem Umrichtergehäuse 2 aufweist. Im vorliegenden Ausführungsbeispiel ist das Dichtelement 12 als eine in einer umlaufenden Nut an der Außenseite des Kragens 5b aufgenommene O-Ring Dichtung 12 ausgebildet. Die Außenkontur des Kragens 5b ist passgenau zu einer entsprechenden Öffnung in der unteren Außenwand des Gehäuseunterteils 2a des Umrichtergehäuses 2 ausgelegt, so dass dieses beim Aufsetzen auf den Adapter 5 dicht mit diesem abschließt.

Mit Hilfe des Adapters 5 ist es möglich, den Frequenzumrichter auf vielen verschiedenen Motorgehäusen 1 zu montieren. Grundsätzlich ist es dazu lediglich erforderlich, dass das Adaptergrundteil 5a die Öffnung des Anschlussstutzens 1a des Motorgehäuses 1 vollständig zu überdecken vermag. Die Schraublöcher in dem Adaptergundteil 5a werden dann jeweils so gebohrt, wie es dem Gewindelochbild des Anschlussstutzens 1 a des betreffenden Motorgehäuses 1 entspricht. In Fig. 3 a) und b) ist dies durch die Markierung mehrerer möglicher Anschraubpunkte 16 angedeutet.
Im Inneren des Kragens 5b des Adapters 5 ist ein Schaltungsträger 6, z.B. in Form einer Leiterplatte aufgenommen, der die von dem Kragen 5b umgebene, zentrale Öffnung 8 zum Teil überdeckt. Auf dem Schaltungsträger 6 sind parallel zueinander eine Schraubklemmenleiste 7 sowie ein Steckverbinderteil 4, in diesem Fall eine Steckerleiste angeordnet. Die Schraubklemmenleiste 7, an deren Stelle z.B. auch eine Federzugklemmenleiste oder ähnliches verwendet werden könnte, dient zum Anschluss der hier nicht dargestellten Motoranschlussleitungen, die durch den neben dem Schaltungsträger 6 verbleibenden Bereich der zentralen Öffnung 8 des Adapters 5 herangeführt werden. Das Steckverbinderteil 4 dient zur elektrischen Kontaktierung eines entsprechenden Gegensteckverbinderteils 3, also in diesem Falle einer Steckbuchsenleiste auf der Leiterplatte 9 des Frequenzumrichters. Die einzelnen Kontakte der Schraubklemmenleiste 7 sowie des Steckverbinderteils 4 sind durch Leiter auf dem Schaltungsträger 6 elektrisch miteinander verbunden, so dass hierüber eine elektrische Verbindung der Motoranschlussleitungen mit dem Frequenzumrichter hergestellt werden kann.

Zum Toleranzausgleich zwischen dem Schaltungsträger 6 des Adapters 5 und der Leiterplatte 9 des Frequenzumrichters ist der Schaltungsträger 6 gegenüber dem Adaptergrundteil 5a schwimmend gelagert. Die Befestigungslöcher 17 im Schaltungträger 6 sind dazu im Durchmesser übermassig gegenüber zugeordneten Positionierhülsen 18 am Adaptergrundteil 5a ausgeführt, und die Befestigungsschrauben 19 erreichen beim Anziehen ihre Blockposition auf den Positionierhülsen 18, bevor ein Kraftschluss der Schraubenköpfe mit dem Schaltungsträger 6 erreicht werden kann. Der Schaltungsträger 6 ist somit zwar in seiner Höhenposition festgelegt, in seiner lateralen Position jedoch in einem gewissen Umfang frei beweglich.

Wie in Fig. 4 zu sehen ist, greifen beim Aufsetzen des Umrichtergehäuses 2 auf dem zuvor auf dem Motorgehäuse 1 aufgeschraubten Adapter 5 zunächst zwei mit der Leiterplatte 9 des Frequenzumrichters fest verbundene Positionierstifte 10 in zugeordnete Positionierlöcher 11 auf dem Schaltungsträger 6 des Adapters 5 ein. Dadurch wird im weiteren Fügevorgang der Schaltungsträger 6 so positioniert, dass ein einwandfreies Ineinandergreifen und elektrisches Kontaktieren des Steckverbinderteils 4 des Adapters 5 mit dem zugeordneten Gegensteckverbinderteil 3 des Frequenzumrichters erfolgen kann. In seiner bestimmungsgemäßen Lage wird das Gehäuseunterteil 2a dann mit seitlich zugeführten Schrauben 15, die in Gewindelöcher 20 am Adaptergrundteil 5a eingeschraubt werden, an diesem festgelegt.

## Patentansprüche

1. Frequenzumrichter zum Steuern eines Elektromotors mit einem zur Montage auf dem Motorgehäuse (1) vorgesehenen Umrichtergehäuse (2), wobei der Frequenzumrichter ausgangsseitig über Steckverbinder (3, 4) lösbar mit dem Elektromotor verbindbar ist, und wobei das Umrichtergehäuse (2) mittels eines mechanisch einerseits mit dem Motorgehäuse (1) und andererseits mit dem Umrichtergehäuse (2) verbundenen Adapters (5) an dem Motorgehäuse (1) festgelegt ist, welcher Adapter (5) einen Schaltungsträger (6) umfasst, auf dem erste elektrische Anschlusselemente (7) zur Verbindung mit den Motoranschlussleitungen und zweite elektrische Anschlusselemente (4) zur Verbindung mit dem Frequenzumrichter vorhanden sind, **dadurch gekennzeichnet, dass** der Frequenzumrichter eingangsseitig mit zumindest einer in das Umrichtergehäuse (2) hineingeführten Netzanschlussleitung (14) zum Anschluss an das Stromnetz verbunden ist, und dass der Adapter (5) ein im Wesentlichen plattenförmiges Adaptergrundteil (5a) umfasst, das eine zentrale Öffnung (8) aufweist, und dass der Schaltungsträger (6) gegenüber dem Adaptergrundteil (5a) schwimmend gelagert ist.

2. Frequenzumrichter nach Anspruch 1, **dadurch gekennzeichnet, dass** eine im Umrichtergehäuse (2) fixierte Leiterplatte (9) fest mit dieser verbundene Positionierstifte (10) aufweist, denen Positionierlöcher (11) auf dem Schaltungsträger (6) des Adapters (5) derart zugeordnet sind, dass beim Zusammenfügen des Umrichtergehäuses (2) mit dem Adapter (5) der Schaltungsträger (6) so positioniert wird, dass ein einwandfreies Ineinandergreifen und elektrisches Kontaktieren des Steckverbinderteils (4) des Adapters (5) mit dem zugeordneten Gegensteckverbinderteil (3) des Frequenzumrichters erfolgt.

3. Frequenzumrichter nach Anspruch 1 oder 2, **dadurch gekennzeichnet, dass** die zentrale Öffnung (8) des Adaptergrundteils (5a) von einem einstückig an dieses angeformten Kragen (5b) umgeben ist.

4. Frequenzumrichter nach Anspruch 3, **dadurch gekennzeichnet, dass** der die zentrale Öffnung (8) des Adaptergrundteils (5a) umgebende Kragen (5b) in seinem oberen Bereich ein Dichtelement (12) aufweist.

5. Frequenzumrichter nach Anspruch 4, **dadurch gekennzeichnet, dass** das Dichtelement (12) als eine in einer umlaufenden Nut an der Außenseite des Kragens (5b) aufgenommene O-Ring Dichtung (12) ausgebildet ist.

6. Frequenzumrichter nach einem der Ansprüche 1 bis 5, **dadurch gekennzeichnet, dass** die ersten elektrischen Anschlusselemente (7) als Schraubklemmenleiste und die zweiten elektrische Anschlusselemente (4) als Steckerleiste ausgeführt sind, und dass die einzelnen Kontakte der Schraubklemmenleiste sowie der Steckerleiste durch Leiter auf dem Schaltungsträger (6) elektrisch miteinander verbunden sind.

## Claims

1. Frequency converter for controlling an electric motor, having a converter housing (2) provided for mounting on the motor housing (1), whereby the frequency converter can be connected on its output side to the electric motor in a detachable manner by means of plug-type connectors (3, 4) and whereby the converter housing (2) is attached to the motor housing (1) by means of an adapter (5) which is mechanically connected to the motor housing (1) on the one hand and to the converter housing (2) on the other hand, said adapter (5) comprising a circuit carrier (6) on which first electrical terminal elements (7) are provided for the purpose of connecting to the motor terminal cables and second electrical terminal elements (4) are provided for the purpose of connecting to the frequency converter, **characterised in that** the frequency converter is connected on the input side to at least one mains power cable (14) leading into the converter housing (2) for the purpose of connecting to the power grid and that the adapter (5) essentially encompasses a plate-shaped adapter base constituent (5a) which has a central opening (8) and that the circuit carrier (6) is supported in a floating manner in respect of the adapter base constituent (5a).

2. Frequency converter according to Claim 1, **characterised in that** a printed circuit board (9) fixed in the converter housing (2) has positioning pins (10) which are permanently connected to the same and whose positioning holes (11) are arranged on the circuit carrier (6) of the adapter (5) in such a manner that, upon joining the converter housing (2) to the adapter (5), the circuit carrier (6) is positioned in such a manner that a perfect engagement and electrical contacting of the plug-type connector constituent (4) of the adapter (5) with the allocated mating plug-type connector (3) of the frequency converter takes place.

3. Frequency converter according to Claim 1 or Claim 2, **characterised in that** the central opening (8) of the adapter base constituent (5a) is encompassed by a collar (5b) moulded in one piece onto the same.

4. Frequency converter according to Claim 3, **characterised in that** the collar (5b) encompassing the central opening (8) of the adapter base constituent (5a) has a sealing element (12) in its upper section.

5. Frequency converter according to Claim 4, **characterised in that** the sealing element (12) is designed as an O-ring gasket (12) accommodated in a circumferential groove on the exterior of the collar (5b).

6. Frequency converter according to any of Claims 1 to 5, **characterised in that** the first electrical terminal elements (7) are designed as screw-type terminal strip and the second electrical terminal elements (4) as connector strip, and that the individual contacts of the screw-type terminal strip and of the connector strip are electrically connected to each other by conductors on the circuit carrier (6).

## Revendications

1. Convertisseur de fréquence pour la commande d'un moteur électrique, avec un boîtier de convertisseur de fréquence (2), destiné à être monté sur le carter du moteur (1), sachant que le convertisseur de fréquence, côté extérieur, peut être relié de manière amovible au moteur électrique par l'intermédiaire de connecteurs à fiches (3, 4), et sachant que le boîtier de convertisseur de fréquence (2) est fixé sur le carter du moteur (1) au moyen d'un adaptateur (5), qui est relié mécaniquement au carter du moteur (1), d'une part, et au boîtier de convertisseur de fréquence (2), d'autre part, ledit adaptateur (5) comprenant un support de circuit (6), sur lequel sont prévus des premiers éléments de raccordement électriques (7) pour le raccordement aux conduites de raccordement du moteur, et des deuxièmes éléments de raccordement électriques (4) pour le raccordement au convertisseur de fréquence,
**caractérisé en ce que** le convertisseur de fréquence est relié,
côté entrée, à au moins une conduite de raccordement au réseau (14), conduisant dans le boîtier du convertisseur de fréquence (2) pour le raccordement au réseau de courant, et que l'adaptateur (5) comprend une pièce de base d'adaptateur (5a), essentiellement en forme de plaque, qui présente une ouverture centrale (8),
et que le support de circuit (6) est monté flottant à l'opposé de la pièce de base de l'adaptateur (5a).

2. Convertisseur de fréquence selon la revendication 1, **caractérisé en ce qu'**une plaquette de circuit (9), fixée dans le boîtier du convertisseur de fréquence (2), présente des pointes de positionnement (10), reliées à celle-ci, dont les trous de positionnement (11) sont disposés sur le support de circuit (6) de l'adaptateur (5) de manière à ce que, lors de l'assemblage du convertisseur de fréquence (2) et de l'adaptateur (5), le support de circuit (6) soit positionné de sorte que s'effectuent un engrenage et un contact électrique impeccables du connecteur à fiche (4) de l'adaptateur (5) avec le connecteur à fiche (3) du convertisseur de fréquence y associé.

3. Convertisseur de fréquence selon revendication 1 ou 2, **caractérisé en ce que** l'ouverture centrale (8) de la pièce de base de l'adaptateur (5a) est entourée d'une collerette (5b), formée d'une pièce avec celle-ci.

4. Convertisseur de fréquence selon la revendication 3, **caractérisé en ce que**. la collerette (5b), entourant l'ouverture centrale (8) de la pièce de base de l'adaptateur (5a), présente, dans sa partie supérieure, un élément d'étanchéité (12).

5. Convertisseur de fréquence selon la revendication 4, **caractérisé en ce que** l'élément d'étanchéité (12) est réalisé sous la forme d'un joint torique (12), qui est logé dans une rainure périphérique de la face extérieure de la collerette (5b).

6. Convertisseur de fréquence selon l'une des revendications 1 à 5, **caractérisé en ce que** les premiers éléments de raccordement électriques (7) sont réalisés en tant que baguette à vis et que les deuxièmes éléments de raccordement électriques (4) sont réalisés en tant que baguette à fiche et que les différents contacts de la baguette à vis ainsi que de la baguette à fiche sont reliés ensemble électriquement sur le support de circuit (6) par l'intermédiaire des conducteurs.
